Europäisches Patentamt

European Patent Office

Office européen des brevets

(19)

(11) Veröffentlichungsnummer : **0 190 297**
**B1**

(12) # EUROPÄISCHE PATENTSCHRIFT

(45) Veröffentlichungstag der Patentschrift :
28.03.90

(21) Anmeldenummer : 85904098.2

(22) Anmeldetag : 29.07.85

(86) Internationale Anmeldenummer :
PCT/EP 85/00377

(87) Internationale Veröffentlichungsnummer :
WO/86010 (13.02.86 Gazettee 86/04)

(51) Int. Cl.$^5$ : **H 02 K 29/08**, H 02 K 11/00

(54) AXIAL KOMPAKTER DIREKTANTRIEBSMOTOR.

(30) Priorität : 28.07.84 DE 3427994

(43) Veröffentlichungstag der Anmeldung :
13.08.86 Patentblatt 86/33

(45) Bekanntmachung des Hinweises auf die Patenterteilung : 28.03.90 Patentblatt 90/13

(84) Benannte Vertragsstaaten :
DE GB

(56) Entgegenhaltungen :
EP--A-- 0 149 228
DE--A-- 3 111 387
DE--A-- 3 327 123
FR--A-- 2 404 290
US--A-- 4 311 933
US--E-- 24 165
Patents Abstracts of Japan, vol,7.no.40.(E-159)(1185)17 February 1983.JP.A.57193959(SEKOH GIKEN) 29 November 1982.

(73) Patentinhaber : PAPST-MOTOREN GmbH & Co. KG
Karl-Maier-Strasse 1 Postfach 35
D-7742 St. Georgen/Schwarzwald 1 (DE)

(72) Erfinder : CAP, Heinrich
Mühlwiesenstrasse 8
D-7742 St. Georgen-Peterzell (DE)
Erfinder : VON DER HEIDE, Johann
Marktstrasse 15
D-7230 Schramberg (DE)
Erfinder : MOOSMANN, Georg
Adlerstrasse 11
D-7741 Tennenbronn (DE)

(74) Vertreter : Strasse, Joachim, Dipl.-Ing. et al
Eisenführ, Speiser & Strasse Zweibrückenstrasse 17
D-8000 München 2 (DE)

**Beschreibung**

Die Erfindung betrifft einen axial kompakten Direktantriebsmotor gemäß dem Oberbegriff des Anspruchs 1. Bei solchen Antrieben, die zum direkten Antrieb von sogenannten Hartplattenspeichern oder « Winchester Drives » mit einer oder mehreren Scheiben, jedoch auch zum Antrieb von sogenannten Floppies oder auch von Videoantrieben oder Plattenspielern, bzw. Bildplatten geeignet sind, besteht zunehmend die Forderung, ein wirtschaftlich günstiges Massenprodukt großer axialer Kompaktheit auf den Markt zu bringen.

Der nächstgelegene Stand der Technik ergibt sich auf diesem Gebiet aus der DE-A-3327123 und der FR-A-2444290.

Aus der DE-A-3327123 ist bereits ein axial kompakter Direktantriebsmotor in Form eines kollektorlosen Gleichstrommotors mit permanent magnetischem Außenrotor bekannt. Es ist auch schon bekannt flächig zu einem Flansch einen weich magnetischen Abschirmring zentral um die Rotationsachse vorzusehen, an dem ein Leiterplattenträger mit einer gedruckten Schaltung befestigt ist.

Aus der FR-A-2404290 ist es bekannt, bei solchen Motoren eine als Abschirmring wirkende magnetische Platte mit einem Leiterplattenträger zu verkleben.

Aufgabe der Erfindung ist es, die vorgenannten gattungsmäßigen Motoren so weiterzubilden, daß bei möglichst hoher axialer Kompaktheit eine einfache und wirtschaftliche Fertigung dieser Motoren möglich ist. Weiterhin ist es Aufgabe der Erfindung, ein Fertigungsverfahren hoher Wirtschaftschaftlichkeit für eine Verbundplatine eines solchen Motors anzugeben.

Die Aufgabe wird mit dem Verfahren nach Anspruch 12 und einem Motor gemäß Anspruch 1 gelöst.

Die Vorteile der Erfindung und weitere Ausgestaltungen werden in Verbindung mit den Figuren im folgenden im einzelnen noch beschrieben.

Es zeigen :

Fig. 1 ein erstes Ausführungsbeispiel der Erfindung im Schnitt im Maßstab 2 : 1 ;

Fig. 2 eine Verbundplatine eines Direktantriebsmotors in Draufsicht für einen Motor nach Fig. 1 oder Fig. 5 ;

Fig. 3 einen Schnitt entlang der Linie III-III ;

Fig. 4A einen Zwischenzustand in der Herstellung der Verbundplatine gemäß Fig. 2 ;

Fig. 4B eine Vielzahl von Einheiten gemäß Fig. 4A in einer großflächigen Verbundplatte ;

Fig. 5 ein zweites, axial noch kompakteres Ausführungsbeispiel, ähnlich wie Fig. 1, jedoch mit justierbarem Hallgenerator, im Maßstab 2 : 1 ;

Fig. 6 ein Schaltungsbeispiel für die Auswertung eines Impulses ;

Fig. 7A die ebene Abwicklung der Rotormagnete gemäß Fig. 8 ;

Fig. 7B den Induktionsverlauf B am Hallgenerator bei Rotation des Rotormagneten gemäß Pfeil 107 in Fig. 7A (oder 8) ;

Fig. 7C den über der Luftspaltfläche in Richtung des Umfangswinkels $\varphi$ aufsummierten Fluß (Flächen-integral B über $\varphi$) ;

Fig. 8 Draufsicht auf die offene Stirnseite der Rotorglocke gemäß Fig. 1 oder Fig. 5 (in natürlicher Größe !).

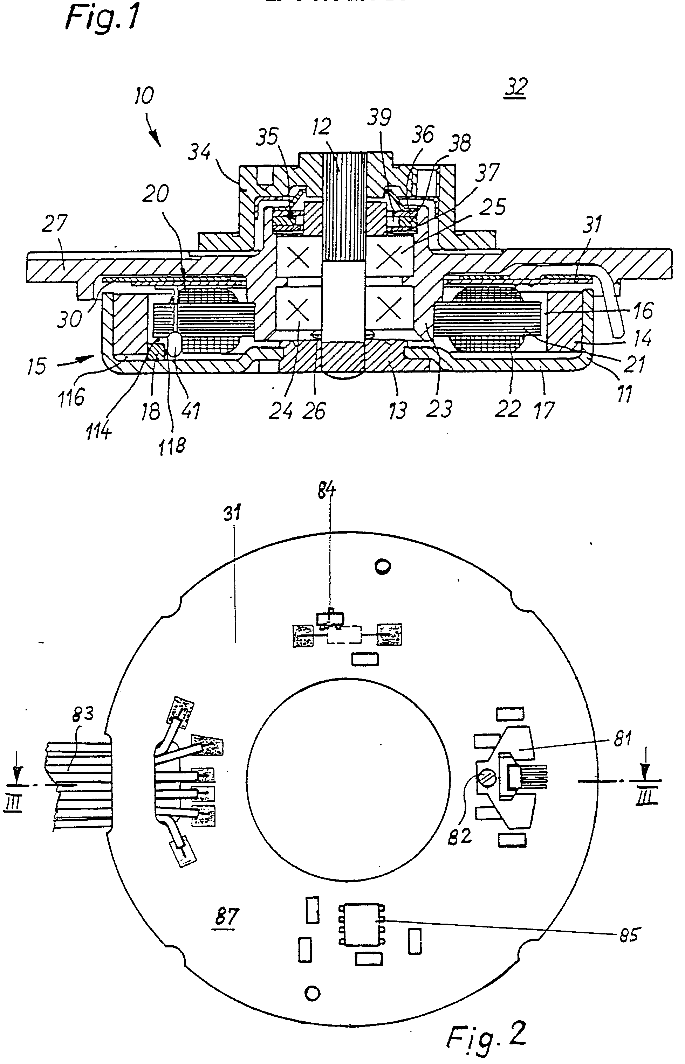

In Fig. 1 ist ein als kollektorloser Gleichstrommotor aufgebauter Außenläufer-Direktantriebsmotor für magnetische Festplattenspeicher veranschaulicht, der insgesamt mit 10 bezeichnet ist. Der Motor weist ein becherförmiges Rotorgehäuse 11 auf, das konzentrisch zu einer Rotorwelle 12 sitzt und mit dieser über eine Buchse 13 fest verbunden ist, die in eine Mittelöffnung des Rotorgehäuses eingepreßt ist. In dem aus magnetisch gut leitendem Werkstoff bestehenden Rotorgehäuse 11 sind eine Mehrzahl von Dauermagnetstücken oder ein einteiliger Dauermagnet 14 angebracht, der zusammen mit den Bauteilen 11 bis 13 den Rotor 15 des Motors 10 bildet. Der Dauermagnetring 14 besteht vorzugsweise aus einer Mischung von Hartferrit, z. B. Bariumferrit, und elastischem Material. Es handelt sich also um einen sogenannten Gummimagneten. Dieser ist über der Polteilung trapezförmig oder annähernd trapezförmig bei relativ kleiner Pollücke z. B. vierpolig radial magnetisiert, so daß an der dem zylindrischen Luftspalt 16 zugewendeten Innenseite des Dauermagneten 14 in wechselnder Folge zwei magnetische Nordpole 101, 103 und zwei magnetische Südpole 102, 104 vorhanden sind, die jeweils eine Breite von etwa 90˚ haben. Das Rotorgehäuse 11 kann als Tiefziehteil hergestellt sein. Es stellt einen magnetischen Rückschluß dar. In dem Eckbereich, der von dem Boden 17 des Rotorgehäuses 11 und dem Innenumfang des Dauermagneten 14 gebildet wird, ist an mit Bezug auf die Magnetisierung des Dauermagneten 14 vorbestimmter Stelle ein z. B. würfelförmiger Indexmagnet 18 befestigt, z. B. in das Rotorgehäuse 11 eingeklebt.

Der Magnetring 14 besteht noch besser aus vorgefertigten Schalenmagneten von 360˚/2p Umfangserstreckung mit erhöhter Induktion $B_R \approx$ 5 KG (2p = Rotorpolzahl).

Am Leiterplattenträger 31 ist auch ein Magnetfeldsensor 41 angebracht, bei dem es sich um einen Hallgenerator handelt, der in geringem axialen Abstand von dem Boden 17 des Gehäusetopfes 11 mit einem zum Permanentmagneten 14 großen radialen Luftspalt 114 und zum Indexmagneten 18 kleinen radialen Luftspalt 118 liegt.

Die in Fig. 1 veranschaulichte Art der Montage des Indexmagneten 18 und des mit dem Permanentmagneten 14 und dem Indexmagneten unter Bildung eines radialen Luftspalts zusammenwirkenden Hallgenerators 41 hat insofern besondere Vorteile, als der Hallgenerator 41 wirkungsvoll dem Feld der Magnete 14, 18 ausgesetzt, von dem unter einem abweichenden Einwirkungswinkel einfallenden Streufeld der Spulenköpfe 22 jedoch nur minimal beeinflußt wird. Der Rotor 15 läßt sich vom Stator 20 abziehen, bzw. auf den Stator aufsetzen, ohne daß dabei der Indexmagnet 18 im Weg ist. Die axiale Bauhöhe des Motors 10 ist besonders gering. Es versteht sich, daß die vorliegend offenbarte Art der Anbringung des Indexmagneten und des Magnetfeldsensors nicht auf eine bestimmte Ausbildung der Kommutierungssignal- und/oder der Indexsignal-Generatorstufe beschränkt ist.

Die Anordnung gemäß Fig. 1 zeigt jedoch nicht nur eine im Hinblick auf den Streufeldeinfluß vom Stator vorteilhafte Wirkung, sondern diese Anordnung hat in Verbindung mit der Tatsache, daß der Permanentmagnet 14 ein Keramikmagnet mit relativ hoher remanenter Induktion von 4-5 KG (Kilo-Gaus) ist, eine weitere vorteilhafte Wirkung. Wenn man nämlich den Indexmagneten 18, der ein Samarium-Kobalt-Magnet (SmCo) mit einer hohen remanenten Induktion von 8-10 KG ist, bei seiner aus Kostengründen extremen Kleinheit in Verbindung mit dem « Motor »-magneten großen Volumens (Permanentmagnet 14) in dessen Nähe zur Indeximpulsgewinnung verwendet, erhält man trotz der relativ hohen permanenten Induktion des Indexmagneten 18, aber wegen seiner extremen volumenmäßigen Kleinheit keinen sauberen Impuls, da sich das Feld der Magnete 14 und 18 in ihrer Wirkung auf den Hallgenerator 41 überlagern und dabei der Impuls « verschmiert » wird. Trotz dieser Überlagerung soll aber der Indexmagnet 18 einen scharfen Impuls im Hallgenerator 41 bewirken. Bei der dargestellten Anordnung eines radial kleinen Luftspalts 118 zwischen dem radial magnetisierten Indexmagneten 18 und dem Hallgenerator 41 und eines radial dazu vergleichsweise mehrfach größeren radialen Luftspalts 114 zwischen dem Hallgenerator 41 und dem ebenfalls radial magnetisierten Magneten 14 (« Hauptmagnet » oder « Motormagnet ») wird nun dieser übermächtige, den scharfen Impuls aufweichende, verschmierende Einfluß des Hauptmagneten 14 reduziert.

Da der Hallgenerator 41 gleichzeitig in einer Statornut (inklusive seiner Halterung 81) geschickt angeordnet ist, welche jedoch eine relativ große Nutöffnung hat (damit wiederum nicht das auf den Hallgenerator wirkende Permanentmagnetfeld zu stark absorbiert wird von den Polenden beiderseits der Nut, so daß die Nutöffnung ein ausreichend großes « magnetisches Fenster » für den Hallgenerator 41 bildet), erreicht man eine optimale Konstellation bei großer Kompaktheit in axialer und radialer Richtung zwischen Motormagnet 14, Indexmagnet 18, Hallgenerator 41, Spulenkopf 22, Statorblechpaket 21. Die unterschiedlichen radialen Luftspalte 118 und 114 bewirken gerade die ideale Kombinierbarkeit eines solchen doppelt ausgenutzten Hallgenerators 41, der nicht nur ein Indexsignal, sondern auch ein Rotorstellungssignal zur Kommutierung der Statorwicklung abgibt, zusammen.

Würde der Permanentmagnet 14 ein sogenannter kunststoffgebundener Magnet sein (Gummimagnet), dann hätte er eine relativ geringe remanente Induktion und der Impuls des Magneten 18 würde immer noch — ausreichend scharf gegenüber dem Rotormagnetfeld sich abhebend — eine genügende Steilheit, auch bei Position im Bereich des anderen axialen Endes des Luftspalts, aufweisen. Aber wenn man, wie hier, Keramikmagnete verwenden will, ist diese Anordnung gemäß Fig. 1 sozusagen « impulsmäßig » und für die Kompaktheit optimal, gleichzeitig auch für die Montage. Überdies ist, wie erwähnt, der Streufeldeinfluß vom Stator kleiner als wenn der Indexmagnet im Bereich des offenen Endes des Gehäusetopfes 11 angeordnet wäre.

Der Freiraum 116 radial zwischen dem Indexmagneten 18 und der Zylinderwand des Gehäusetopfes 11 wirkt an der dortigen Stelle auch noch im Sinne einer relativen Verstärkung des Indexfeldes, also auch im Sinne einer Verbesserung des Impulses. Zu diesem Zweck dürfte sogar die axiale Länge dieses Freiraumes 116 noch größer sein (durchaus doppelt so groß wie in Fig. 1 gezeichnet).

Es wird gerade zur optimalen Dimensionierung dieser Verhältnisse in der inneren Ecke des Gehäusetopfes 11 zwischen Permanentmagnet 14, Indexmagnet 18, Hallgenerator 41 und Statorblechpaket 21 ausdrücklich auf die zeichnerischen Proportionen Bezug genommen !

Der Freiraum 116 kann aus Fertigungsgründen ohnehin nicht voll mit dem Magnetmaterial ausgefüllt werden, selbst wenn das Statorblechpaket axial noch etwas länger wäre (trotz der notwendigen axialen maximalen Motorabmessung), so daß diese Anordnung insgesamt wirklich eine sehr vorteilhafte Lösung bildet. Der radial sehr große Luftspalt des Raumes 116 summiert sich sozusagen zum schon vorhandenen großen Luftspalt 114, so daß der Einfluß des Motormagneten auf den Hallgenerator 41 insgesamt also noch « dezenter » wird.

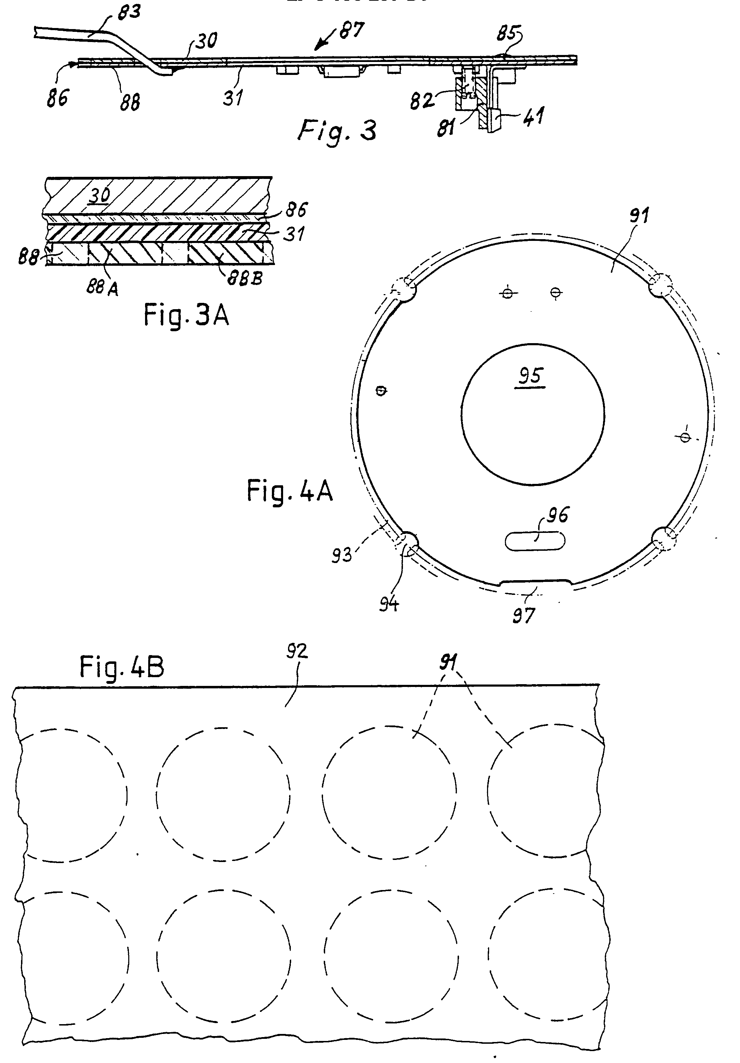

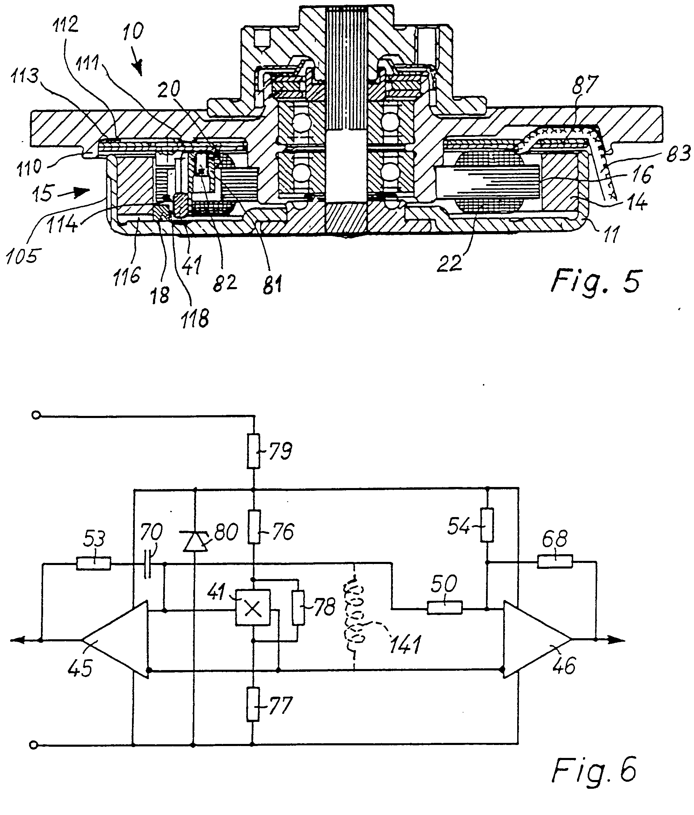

Die Fig. 2 zeigt die Draufsicht auf eine fertige, bestückte, mit Anschlußlitzen 83 versehene Verbundplatine 87 im Einbauzustand gemäß Fig. 5 von unten, jedoch vor deren Montage. Die Platte ist mit elektronischen Bauteilen 84, 85 (sog. Chips) bestückt. Das ist eine herstellgünstige, automatisierbare Bestückungsmethode ganz im Sinne axialer Kompaktheit. Der Hallgeneratorträger 81 ist als abgewinkeltes Kunststoffteil ausgebildet, wie Fig. 3 im einzelnen zeigt. Er ist über einen angespritzten Kunststoffnietkopf 85 warm verstaucht in der Verbundplatine 87 befestigt. Das abgewinkelte Element 81 trägt am oberen Ende den Hallgenerator 41, dessen rechte Stirnfläche zum radialen Luftspalt weist. Das abgewinkelte Element ist nachgiebig in Abwinklungsrichtung ausgestaltet, so daß die eingesetzte Wurmschraube 82 durch Verstellung und Abstützung auf der Verbundplatine 87 die Winkellage des Hallgenerators, bzw. des Trägers 81 zur ebenen Fläche des Teils 87 verändert. Fallweise ist diese Justierung sehr erwünscht, weil man damit die Signalempfindlichkeit noch einstellen kann. Die Schraube 82 ist auch beim fertigmontierten Innenstator, jedoch vor Aufsetzen des Rotortopfes, justierbar.

Die Justierung kann auch noch nachvollzogen werden, falls sich im Boden des Rotortopfes 11 eine Öffnung im entsprechenden radialen Abstand von der Welle befindet, so daß diese Öffnung bei entsprechender Umfangsposition des Rotors über dem Schraubkopf der Wurmschraube 82 befinden kann. Vorteilhafterweise aber wird die Justierung vor dem Aufsetzen des Rotors mit Hilfe einer Justierhilfsvorrichtung vorgenommen.

Die Fig. 3A zeigt in vergrößerter Darstellung die Abschirmschicht 30, die vorzugsweise als trägerlose Klebefolie ausgebildete Verklebungsschicht 86, der Leiterplattenträger 31, die darauf konventionell aufgebrachte Kupferbahn 88, wobei die Querschnitte 88A und 88B z. B. bereits nach Ausätzung noch vorhandene Leiterbahnen der gedruckten Schaltung der ehemals kompletten Schicht 88 andeuten.

Die Fig. 3 zeigt den Schnitt der Verbundplatine 87, jedoch um 180° geschwenkt gegenüber der Einbaulage gemäß Fig. 2.

In Fig. 5 sitzt diese Verbundplatine satt in einem Ringrand 110 des Flansches 27, und die Innenfläche 112 des Flansches weist umfangsmäßig verteilte Warzen 111 auf, auf denen die Verbundplatine mehr oder weniger satt aufliegt, wobei der Außenbereich der Verbundplatine vorzugsweise vor dem Einlegen derselben in die Flanschbodenfläche 112 mit einem schwingungs- oder geräuschdämpfenden Überzug 113 versehen ist, so daß Flansch 27 und Abschirmring 30 durch diese Schicht 113 eine geräuschdämpfende Sandwich-Schichtung bildet. Ein Luftspalt 118 kann mit einer Auftragsverschweißung in der Platine 87 mittels Schraube auf einfache Weise justiert werden.

Die Fig. 4A zeigt einen Zwischenzustand in der Fertigung, wobei eine einzelne Verbundplatineneinheit 91 hier noch im Verband der großflächigen Platte 92 gemäß Fig. 4B drinhängt. Die Brücken im Bereich 94 sind noch vorhanden, so daß nur die sichelförmigen, z. B. vierteilkreisförmigen Umfangsausstanzungen 93 eine Verbundplatineneinheit begrenzen. Die ganze Platte 92 wird zunächst in ihren verschiedenen Schichten aufgebaut. Danach wird die Schicht 88 gemäß Fig. 3A angeätzt, so daß sich die gedruckten Leiterbahnen ergeben. Danach werden die Ausnehmungen 93 ausgestanzt. Dann wird die großflächige Platte 92 auf einer Bestückungsmaschine zur Chip-Bestückung und anschließend zur manuellen Bestückung mit weiteren Bauteilen (die für eine automatisierte Chip-Bestückung nicht geeignet sind) auf der Unterseite (siehe Fig. 3), also auf der Oberfläche des Leiterplattenträgers 31 vorgesehen. Die Ausnehmungen 93, die zentrale Ausnehmung 95, auch die Ausnehmungen 96 und 97 werden mit den sichelförmigen Einschnitten 93 gleichzeitig ausgestanzt. Nach vollständiger Bestückung werden erst die einzelnen Einheiten 91 aus der großflächigen Verbundplatinenplatte 92 herausgestanzt, indem nur durch Lochstempel, die in Fig. 4A angedeutet sind, rings um die Brücken 94 der Umfang jeder Einheit 87, bzw. 91 freigestanzt wird.

In Fig. 1 oder Fig. 5 ist das Lagertragrohr einstückig mit dem Flansch in Leichtmetalldruckgußausführung gehalten. Die Kugellager 25 und 24 sind axial sehr kompakt angeordnet. Zwischen ihnen und zwischen dem unteren Lager 24 und dem zentralen Flanschteil 13, welches die Außenrotorglocke hält, ist nur ein minimal notwendiger Abstand, der noch von Federdistanzelementen ausgefüllt wird. Die extreme axiale Kompaktheit reduziert die Lagerqualität. Deshalb wird das untere Kugellager möglichst in der axialen Mitte des Statorblechpaketes und auch in der axialen Mitte des rotierenden Permanentmagnetringes 14 vorgesehen, um so einen möglichst ruhigen Lauf zu gewährleisten. Die Plattenspeichernabe 34 taucht im Ausführungsbeispiel der Fig. 5 z. B. stärker in den Flansch 27 ein, auf diese Weise die axiale Kompaktheit erhöhend. Zum gleichen Zweck ist auch die verschachtelte Anordnung der magnetischen Dichtung 35 am oberen Ende des Lagerrohres 23 so vorgesehen, daß die Plattennabe das Lagerrohr teilweise umgreift.

Wenn man den Leiterplattenträge, d. h. die Schicht 31 zunehmend dünner macht und entsprechenden Kunststoff, z. B. Polyimide hat, kann die Folie auch gewickelt, eventuell sogar mehrfach für eine räumlich größere Kompaktheit umgelegt werden. Denn bei relativ kleinem Luftspaltdurchmesser kann es auch schwierig sein, die Bauelemente und die Schaltung im Ringbereich (s. 110) der Fig. 5 unterzubringen. Durch Abwinklung und Umlenkung ist also eine größere Raumausnützung möglich.

Der Hallgenerator 41, der also vom permanenten Motormagnet 14 und vom Indexmagnet 18 beaufschlagt wird, wertet diese beiden Informationen über die Komparatoren 45, 46 gemäß Fig. 6 (siehe auch Anmeldung DE-A-34 21 487) unterschiedlich aus. Die Erzeugung des Impulses kann z. B. auch gemäß der US-PS 4 531 079 über eine über zwei Statorpole geführte Induktionsschleife geschehen, und diese Substitution der Impulserzeugung würde in Fig. 6 dann von der dort gestrichelt dargestellten Induktions« spule » 141 (die als Durchmesserwicklung auf dem Stator vorgesehen ist) geleistet (im einzelnen in der DE-OS 33 19 029 dargestellt). Dabei hätten dann die Widerstände 78 und die Innenwiderstände des Hallgenerators 41 der Fig. 6 unendlich große Werte, so daß sie in der Schaltung nicht existent wären. Die Induktions« spule » 141 (gestrichelte Spule) und der Hallgenerator 41 mit dem Widerstand 78 gemäß Fig. 6 sind also dort alternative Möglichkeiten, das ursprüngliche Signal zu erzeugen, aber die Alternative mit der Induktionsspule gehört nicht zur Erfindung.

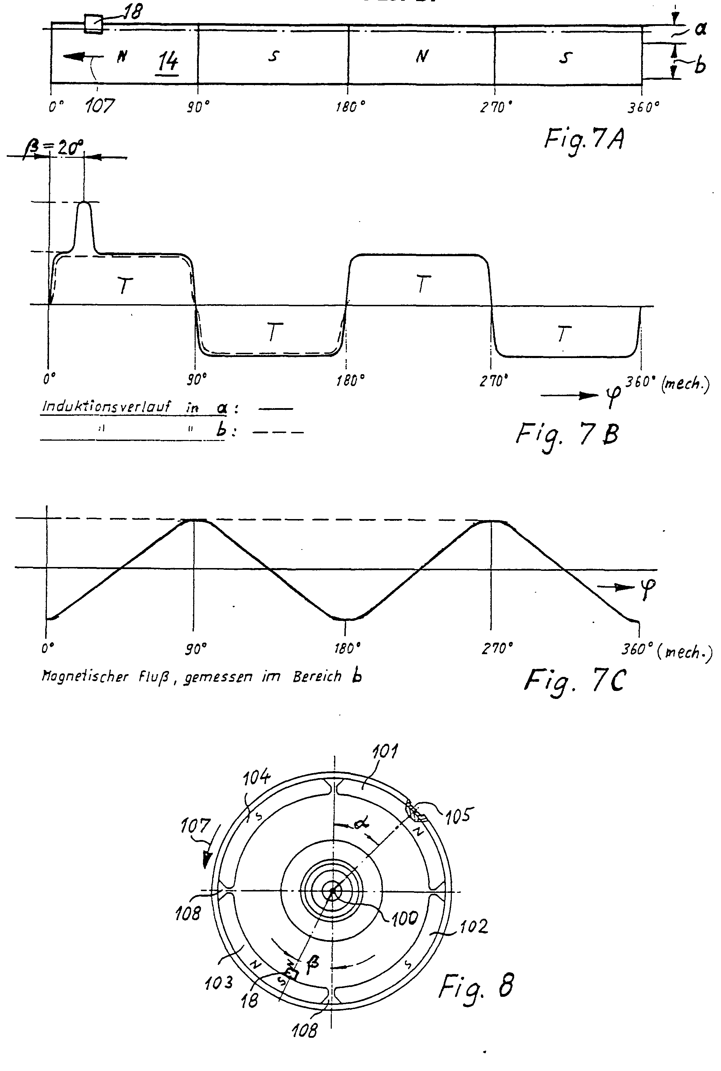

Wenn man sich die Magnetbahnen des Indexmagneten 18 und die Motormagnete 14 abgewickelt denkt, wie das in Fig. 7A dargestellt ist, dann sieht der Induktionsverlauf im axialen Bereich a des Permanentmagneten, wie er auf den Hallgenerator wirkt (durch Überlagerung des Indexmagneten 18 und des Motormagneten 14) dort so aus, wie in Fig. 7B dargestellt. Man hat also einen aufgesetzten, relativ scharfen Impuls I auf den trapezförmigen Induktionsblöcken T (letztere vom Motormagneten 14 her). Das führt insgesamt zu einer magnetischen Flußverteilung über dem Umfang, wie in Fig. 7C dargestellt, nämlich im wesentlichen dreieckförmig verlaufend, aber die « Spitzen » sind abgerundet. Der Stator hat vier ausgeprägte Pole mit gegenüber der Rotationsachse 100 veränderlichem Abstand seiner Polaußenflächen und gegenüber der Rotationsachse 100 zylindrischen Innenflächen der vier permanentmagnetischen Sektorschalen 101, 102, 103, 104, die diesen vier Statorpolen entsprechen. Die vier Statorpole sind abwechselnd gegensinnig fortlaufend und bifilar bewickelt.

Die in doppelter natürlicher Größe dargestellte Fig. 1 weist ein kobusförmiges Indexmagnetchen 18 von 2 mm Kantenlänge aus Samariumkobalt auf mit einer remanenten Induktion von 8-9 KG ; letzteres ist radial magnetisiert (radial, d. h. senkrecht zur Rotationsachse 100).

In die Außenläuferrotorglocke 11 sind (als Motormagnet 14) vier Permanentviertelschalenmagnete 101, 102, 103, 104 eingeklebt. Diese vier Viertelschalenmagnete haben relativ kleine Pollücken 108, welche am Umfang äquidistant verteilt um 90° zueinander versetzt sind. Der Impulsmagnet 18 ist nun gegenüber einer Pollücke um einen Winkel β von etwa 20° mech. versetzt, und zwar gegen die Drehrichtung (Pfeil 107). Der Abstand zur Pollücke 108 muß so groß sein, daß der volle Amplitudenwert der trapezförmigen Magnetisierung an dieser Stelle bereits vorliegt im Luftspalt, damit die Indeximpulsamplitude sich voll zu diesem Wert addiert. Praktisch wurde gefunden, daß das bei einem vierpoligen Rotor gemäß Fig. 8 mindestens 8° mech. sein müßten. In diesem Fall hat man 20° mech. gewählt. Auf jeden Fall muß hier ein Mindestabstand $\beta_0$ zur Pollücke eingehalten werden.

Eine Außennut 105 (eingeprägt oder eingefräst) ermöglicht eine zusätzliche oder alternative Impulsgewinnung. Es ist günstig, wenn diese Ausnehmung in der Mitte einer Permanentmagnetviertelschale (oder Halbschale, je nachdem wie groß die Poligkeit des Rotors ist) sich befindet, weil dort der Fluß sich nach links und rechts im magnetischen Kreis teilt, so daß in der Mitte des Permanentmagnetpols praktisch kein Feld besteht, und deshalb diese Schwächung oder Unsymmetrierung des Magnetmaterials dort vom geringsten Einfluß ist für eine eventuelle Schwächung des Motors. Aus diesem Grunde ist in Fig. 8 der Winkel α = 45°.

Falls die Außennut 105 nur eingeprägt wird, vereinfacht das die Rotorauswuchtung, weil kein Material entnommen, sondern dieses nur umgeformt wird.

Die Fig. 8 zeigt eine Draufsicht auf die offene Seite der Gehäuserotorschale 11 in natürlicher Größe. Diese absolute Größe (Luftspaltdurchmesser ca. 45 mm) beeinflußt die Lösungsmöglichkeiten (kompakte Anordnung bei Serienfertigung), auch in gewissem Maß die Größe des Winkels β.

## Patentansprüche

1. Axial kompakter Direktantriebsmotor (10), der als kollektorlosen Gleichstrommotor mit permanentmagnetischen Außenrotor ausgebildet ist, bei dem der Innenstator (21), vorzugsweise in einer breiten Nut, einen Hallgenerator (41) mit vier Ausgängen, der zum radialen Luftspaltfeld gerichtet ist, in der Nähe des Rotorbodens aufweist, wobei der Hallgenerator (41) auf einer Verbundplatine befestigt ist, die aus einem um die Rotationsachse auf einem Motorflansch (27) vorgesehenen Abschirmring (30) und einem damit verbundenen Leiterplattenträger (31) besteht, dadurch gekennzeichnet, daß der Abschirmring mit dem Leiterplattenträger mittels einer Klebeschicht (86) verbunden ist und daß der Außenrotor (11) ein weichmagnetischer, tiefgezogener, topfartiger Teil ist, längs dessen innerer hohlzylindrischer Wand umfangsmäßig verteilte Permanentmagnete axial zur Innenfläche des Topfbodens einen Abstandsraum (118) mitbilden, welcher mindestens an einer Umfangsstelle von einem sehr kleinvolumigen Indexmagneten (18) hoher remanenter Induktion axial mindestens zu einem wesentlichen Teil abgedeckt ist bzw. diesen überbrückt, und daß der Indexmagnet (18), axial in der Nähe der Bodenfläche, radial innen an einem Permanentmagneten anliegt.

2. Axial kompakter Direktantriebsmotor nach Anspruch 1, dadurch gekennzeichnet, daß der Indexmagnet (18) axial nur wenig über den Abstandsraum (118) hinausragt.

3. Axial kompakter Direktantriebsmotor nach Anspruch 1 oder 2, dadurch gekennzeichnet, daß die axiale Länge des Statorblechpakets und des Indexmagneten zusammen gleich der des Rotormagneten (14) ist, wobei vorzugsweise die axiale Mitte des Permanentmagneten (Rotormagnet 14) und die des Statorpakets etwa in einer Ebene liegen.

4. Axial kompakter Direktantriebsmotor nach einem oder mehreren der Ansprüche 1 bis 3, dadurch gekennzeichnet, daß die Klebeschicht unmittelbar unter Druck und Hitze und/oder unter Einwirkung von Lösungsmitteln aus dem Material des Leiterplattenträgers, also ohne zusätzlichen Klebstoff gebildet ist.

5. Axial kompakter Direktantriebsmotor nach einem oder mehreren der vorhergehenden Ansprüche, dadurch gekennzeichnet, daß der Außenrotor (11) mit einer Welle in einem Lager drehbar gelagert ist und daß sich an dem zugehörigen Lagerrohr (23) der Motorflansch (27) in einer zum Lagerrohr senkrechten Ebene erstreckt, wobei der Außenrotor axial nahe an diesen Flansch heranragt und oberhalb dieses Flansches zum anderen Ende der Welle eine Plattennabe aufgesetzt ist.

6. Axial kompakter Direktantriebsmotor nach einem oder mehreren der vorhergehenden Ansprüche, dadurch gekennzeichnet, daß die Klebeschicht als trägerlose Klebefolie (86) ausgebildet ist.

7. Axial kompakter Direktantriebsmotor nach einem oder mehreren der vorhergehenden Ansprüche, dadurch gekennzeichnet, daß der Leiterplattenträger (31) als Folie aus Polyester oder Polyimid mit einer Dicke von maximal 0,5 mm ausgebildet ist.

8. Axial kompakter Direktantriebsmotor nach einem oder mehreren der vorhergehenden Ansprüche, dadurch gekennzeichnet, daß der Leiterplattenträger (31) eine Dicke von etwa 0,1 mm aufweist.

9. Axial kompakter Direktantriebsmotor nach einem oder mehreren der vorhergehenden Ansprüche, dadurch gekennzeichnet, daß die Verbundplatine einen im wesentlichen ringförmigen Leiterplattenträger (31) mit aufgedruckter Schaltung aufweist.

10. Axial kompakter Direktantriebsmotor nach einem oder mehreren der vorhergehenden Ansprüche, dadurch gekennzeichnet, daß die Verbundplatine (87) die Wickelköpfe des Innenstators (22) abdeckt.

11. Axial kompakter Direktantriebsmotor nach einem oder mehreren der vorhergehenden Ansprüche, dadurch gekennzeichnet, daß der Abschirmring (30) mindestens teilflächig am Flansch anliegt.

12. Verfahren zur Herstellung einer Verbundplatine (87) für einen Direktantriebsmotor (10) nach Anspruch 1, kollektorlosen Gleichstrommotor, der als, bei dem flächig zu einem Flansch (27) ein mit permanentmagnetischem Außenrotor ausgebildet ist weichmagnetischer Abschirmring (30) zentral um die Rotationsachse mindestens zu einem großen Teil seines Umfanges vorgesehen ist und bei dem an dem Abschirmring ein Leiterplattenträger (31) mit einer gedruckten Schaltung (88) befestigt ist, wobei eine Materialschicht des Abschirmrings (30) und eine Materialschicht des Leiterplattenträgers (31), die eine Kupferschicht (88) aufweist, intensiv miteinander unter Bildung einer großflächigen Platte (92) verklebt werden, dann auf diese großflächige Platte (92) eine Vielzahl Einzelschaltungen aufgeätzt werden, danach jede Einzelschaltung (Verdundplatineneinheit (87)) durch-z. B. viertel-, kreisförmige, sichelartige-Einschnitte (93) begrenzend umstanzt wird, jedoch Brücken (94) zwischen diesen Einschnitten bestehen bleiben und nach Bestücken der großflächigen Platte (92) auf einer Bestückungsmaschine, sowie nach manueller Bestückung mit weiteren Bauteilen auf den einzelnen Leiterplattenträgern (31) der Verbundplatine (87) diese Brücken (94) durch Lochstempel aufgetrennt werden.

13. Verfahren nach Anspruch 1, dadurch gekennzeichnet, daß die Verklebung der Schicht des Abschirmringes (30) mit dem Leiterplattenträger (31) mittels trägerloser Klebefolie unter Druck und Hitze und/oder unter Einwirkung von Lösungsmitteln erfolgt.

## Claims

1. Axially compact direct drive motor comprised by a commutatorless direct-current motor with a permanent magnetic outside rotor, wherein the inner stator (21) is preferably in a broad slot, has near the bottom of the rotor a Hall-generator (41) with four outlets which is directed to the radial air gap field whereby the Hall-generator (41) is attached to a printed circuit board which consists of a screening ring (30) planned to be around the rotation axis on a motor flange (27) and a therewith connected circuit board carrier (31) characterized in that the screening ring is connected with the circuit board carrier (31) by an adhesive coat (86) and that the outside rotor (II) is a soft magnetic, deeply-sustained pot-like part, alongside the inner hollow cylindric wall of which permanent magnets distributed according to size co-form a space (118) axially to the inner surface of the bottom of the pot which is at least at one peripheral place covered by or passed by a very small volume index magnet (18) of a high remanent induction and that the index magnet (18) is radially adjacent to a permanent magnet.

2. Axially compact direct drive motor characterized in that the index magnet (18) axially towers not far over the space (118).

3. Axially compact direct drive motor according to claim 1 or 2 characterized in that the axial length of the stator lamination plates and the index magnet together is of the same length as the rotor magnet (14) whereby preferably the axial middle of the permanent magnet (rotor magnet 14) and that of the stator are coplanor.

4. Axially compact direct drive motor according to one or several of the claims 1-3 characterized in that the adhesive coat is directly composed under pressure and heat and/or under influence of solvents of the material of the circuit board carrier that means that it is formed without additional glue.

5. Axially compact direct drive motor according to one or several of the above-mentioned claims characterized in that the outside rotor (II) is pivoted in a bearing with a shaft and that the motor flange (27) on the belonging bearing valve (23) extends to a plain vertical to the bearing valve whereby the outside rotor axially reaches near this flange and above this flange a hub plate is attached to the other end of the shaft.

6. Axially compact direct drive motor according to one or several of the above-mentioned claims characterized in that the adhesive coat is developed as a carrierless splicing tape (86).

7. Axially compact direct drive motor according to one or several of the above-mentioned claims characterized in that the circuit board carrier (31) is developed as a foil from polyester or polyimid with a thickness of about 0,5 mm.

8. Axially compact direct drive motor according to one or several of the above-mentioned claims characterized in that the circuit board carrier (31) has a thickness of about 0,1 mm.

9. Axially compact direct drive motor according to one or several of the above-mentioned claims characterized in that the basically ring-shaped printed circuit board has a ring-shaped circuit board carrier (31) with an on-printed circuit.

10. Axially compact direct drive motor according to one or several of the above-mentioned claims characterized in that the printed circuit board (87) covers the coil ends of the inner stator (22).

11. Axially compact direct drive motor according to one or several of the above-mentioned claims characterized in that the screening ring (30) is at least joint-faced adjacent to the flange.

12. Method of manufacturing a printed circuit board (87) for a direct drive motor (10) according to claim 1 comprised by a commutatorless direct-current motor with a permanent-magnetic outside rotor, for which areal to a flange (27) a soft magnetic screening ring is centrally around the rotation axis at least to an important part of its size and to which on the screening ring a circuit board carrier (31) is attached to an on-printed circuit whereby a material layer of the screening ring (30) and a material layer of the circuit board carrier layer of copper (88) will be sticked together intensely and shape a large surface plate (92) and many circuits will be edged upon this large surface plate (92), thereafter every individual circuit (printed circuit board 87) is punched for limiting by e.g. quarterly-, circular-, sickle shaped cuts (93) whereby bridges (94) between this cuts remain and will be severed by punches after the lining-up of the large surface plate (92) on a line-up machine and after manual lining-up with further components on the individual circuit board carriers (31) of the printed circuit board (87).

13. Method according to claim 1 characterized in that the sticking of the layer of the screening ring (30) with the circuit board carrier is effected by a carrierless splicing tape under pressure and heat and/or under the influence of solvents.

## Revendications

1. Moteur d'entraînement direct compact axialement qui est constitué par un moteur à courant continu sans collecteur (10) avec un rotor extérieur à aimant permanent sur lequel le stator intérieur (21) présente à proximité de la base du rotor, de préférence dans une large gorge un générateur Hall (41) avec quatre sorties, qui est dirigé vers le champ d'entrefer radial, sur lequel le générateur Hall (41) est fixé sur une platine composite qui est constituée par un anneau de protection (30) autour de l'axe de rotation prévu sur une bride de moteur (27) par un support de plaquette de circuits imprimés (31) relié à celui-ci, caractérisé en ce que l'anneau de protection est relié au support à plaquette de circuits imprimés au moyen d'une couche adhésive et en ce que le rotor extérieur (11) est une pièce réalisée en forme de pot par emboutissage profond, le long de la paroi cylindrique creuse intérieure de laquelle des aimants permanents constituent ensemble axialement un intervalle (118), par rapport à la face intérieure de la base du pot, qui est recouvert axialement au moins en un endroit du pourtour par un aimant d'index (18) de très faible volume à induction rémanente élevée, du moins sur une partie importante, ou comble celui-ci et en ce que l'aimant d'index (18) s'appuie axialement à proximité de la surface de base et radialement, à l'intérieur, sur un aimant permanent.

2. Moteur d'entraînement direct compact axialement selon la revendication 1 caractérisé en ce que l'aimant d'index (18) ne fait saillie que de peu au-dessus de l'intervalle (118).

3. Moteur d'entraînement compact axialement selon la revendication 1 ou 2 ; caractérisé en ce que, la longueur axiale du paquet de tôles du stator et de l'aimant à index sont, ensemble, égales à celle de l'aimant du rotor (14), le milieu axial de l'aimant permanent (aimant du rotor 14) et celui du paquet du stator se situant approximativement dans un même plan.

4. Moteur d'entraînement direct compact axialement selon une ou plusieurs revendications 1 à 3, caractérisé en ce que, la couche adhésive est constituée directement sous l'effet de la pression et de la chaleur et/ou de solvants dans la matière même du support de plaquette de circuits imprimés, soit sans matière collante supplémentaire.

5. Moteur d'entraînement direct compact axialement selon une ou plusieurs des revendications qui précèdent, caractérisé en ce que, le rotor extérieur (11) est monté libre en rotation avec un arbre dans un palier et en ce que la bride de moteur (27) s'étend contre le tube-palier (23) dans un plan perpendiculaire au tube-palier, alors que le rotor extérieur se dresse axialement près de cette bride et qu'un moyeu de plateau est mis en place au-dessus de cette bride, à l'autre extrémité de l'arbre.

6. Moteur d'entraînement direct compact axialement selon une ou plusieurs des revendications qui précèdent, caractérisé en ce que, la couche adhésive est constituée par une feuille adhésive (86 sans support).

7. Moteur d'entraînement direct compact axialement selon une ou plusieurs des revendications qui précèdent, caractérisé en ce que, le support de plaquette de circuits imprimés (31) est constitué par une feuille de polyester ou de polyimide d'une épaisseur maximale de 0,5 mm.

8. Moteur d'entraînement direct compact axialement selon une ou plusieurs des revendications qui précèdent, caractérisé en ce que, le support de plaquette de circuits imprimés (31) présente une épaisseur de 0,1 mm environ.

9. Moteur d'entraînement direct compact axialement selon une ou plusieurs des revendications qui précèdent, caractérisé en ce que, la platine composite présente un support de plaquette de circuits imprimés (31) avec un circuit imprimé.

10. Moteur d'entraînement direct compact axialement selon une ou plusieurs des revendications qui précèdent, caractérisé en ce que, la platine composite (87) recouvre les têtes d'enroulements du stator intérieur (22).

11. Moteur d'entraînement direct compact axialement selon une ou plusieurs des revendications qui précèdent, caractérisé en ce que, l'anneau de protection (30) est appuyé au moins par une partie de sa surface sur la bride.

12. Procédé pour la fabrication d'une platine composite (87) pour un moteur d'entraînemnt direct selon la revendication 1, qui est constitué sous forme de moteur à courant continu sans collecteur, sur lequel est prévu avec un rotor extérieur à aimant permanent un anneau de protection (30) magnétique relié par sa surface à une bride (27) et centré sur l'axe de rotation au moins sur une grande partie de son pourtour, et sur l'anneau de protection duquel est fixé un support de plaquette de circuits imprimés (31) avec un circuit imprimé (89), tandis qu'une couche de matière de l'anneau de protection (30) et une couche de matière du support de plaquette de circuits imprimés (31) qui présente une couche de cuivre, sont intimement collées entre elles en constituant une plaque de grande surface (92), sur laquelle plaque de grande surface (92) est gravé un grand nombre de circuits individuels, chaque circuit (unité de platine composite (87)) étant ensuite entaillé, à titre de délimitation, par des incisions (93) en forme de carré, de cercle ou de croissant, tandis que des ponts (94) subsistent entre ces incisions et que ces ponts (94) sont défaits au moyen de poinçons après l'équipement de la plaque de grande surface (92) sur une machine appropriée et après le montage manuel d'autres composants sur les supports individuels de plaquettes de circuits imprimés (31) de la platine composite (87).

13. Procédé selon la revendication 1 caractérisé en ce que, le collage de la couche de l'anneau de protection (30) avec le support de plaquette de circuits imprimés (31) est effectué au moyen d'une feuille adhésive sans support sous l'effet de la pression et de la chaleur et/ou de solvants.

Fig.1

Fig.2

1

*83*

*87*

*30*

*85*

*86*

*88*

*31*

*82*

*81*

*41*

*Fig. 3*

*30*

*86*

*31*

*88*

*88A*

*88B*

*Fig. 3A*

*91*

*95*

*96*

*93*

*94*

*97*

*Fig. 4A*

*Fig. 4B*

*92*

*91*

Fig. 5

Fig. 6

Fig.7A

Induktionsverlauf in α : ———
" " b : ———

Fig. 7 B

Magnetischer Fluß, gemessen im Bereich b

Fig. 7C

Fig. 8

4